# EUROPÄISCHE PATENTANMELDUNG

(11) **EP 0 657 852 A2**
(43) Veröffentlichungstag der Anmeldung: **14.06.1995**
(21) Anmeldenummer: 94117755.2
(22) Anmeldetag: 10.11.1994
(51) Int. Cl.: G06T 1/20

(54) **Verfahren und Einrichtung zur Informations- und Bildverarbeitung**

(71) Anmelder: Fuzzy & Fractals GmbH KYBERNETISCHES FORSCHUNGSZENTRUM, D-01309 Dresden (DE)
(72) Erfinder: Seebald, Rudolf Josef, Dr. jur., D-01309 Dresden (DE)

(57) **Zusammenfassung**

Die Erfindung betrifft ein Verfahren und eine Einrichtung zur Informations- und Bildverarbeitung mit einer Verarbeitungseinrichtung.

Die der Erfindung zugrunde liegende Aufgabe besteht darin, ein neuartiges Verfahren und eine entsprechende Einrichtung zur Informations- und Bildverarbeitung zu schaffen, die u.a. die Nachteile von nur linear abspielbaren Aufzeichnungsbändern oder den aufwendigen Wechsel zwischen verschiedenen Aufzeichnungsmedien vom Band über Festplatte zur nur einmal beschreibbaren CD (Compact Disk) usw. überwindet.

Erreicht wird dies erfindungsgemäß dadurch, daß in Kombination von verlustfreier und auch verlustbehafteter Verfahren Informationen zur Beschreibung von Bildern und Bildfolgen als auch Bilder und Bildfolgen zur Beschreibung von Informationen erzeugt und in einem mehrdimensional aufgebauten oder mehrdimensional organisierbaren Speichersystem zur weiteren Verarbeitung abgelegt und benutzt werden.

Damit ist eine bessere Erfassung, Auswertung, Übertragung, Wiedergabe und Speicherung von Informationen und Bildern, vorzugsweise für das audio-visuelle Wahrnehmungssystem des Menschen, möglich. Die Erfindung ist insbesondere anwendbar in bildgebenden Systemen aller Art als auch in anderen Systemen zur Verarbeitung großer Datenmengen von Meßwerten, Signalen und Informationen verschiedenster Art.

## Beschreibung

Die Erfindung betrifft ein Verfahren und eine Einrichtung zur Informations- und Bildverarbeitung mit einer Verarbeitungseinrichtung.

Es ist bekannt, daß der Mensch für sich und nachfolgende Generationen Informationen aufzeichnet, beispielsweise auf Tonbändern, in Büchern, auf Videobändern, auf Computerdisketten, Datenbändern, CD-ROM bzw. WORM-Platten usw. Mit den zunehmenden technischen Möglichkeiten als auch dem wachsendem Bedarf einerseits und dem zugleich auch mit der Zeit wachsenden Datenbestand andererseits entstehen völlig neuartige Probleme in der Archivierung, Auswahl und Verarbeitung gesuchter oder vorhandener Informationen. Das gilt in vergleichbarer Weise von Fachbibliotheken, über medizinische Röntgenbilder bis hin zu Erdfernerkundungsdaten usw.

Der Mensch nimmt von Natur aus den größten Teil seiner Informationen über das audiovisuelle Wahrnehmungssystem auf, und das ist natürlich bei aller technischer Entwicklung relativ konstant geblieben. Ein entsprechend geschaffenes Instrument zur Bild- und Ton-Aufnahme ist die Video-Kamera. Müssen jedoch die aufgenommenen Bilder bearbeitet oder die Szenen geschnitten werden, beginnt ein aufwendiger Prozeß.

Die nur linear abspielbaren Bänder müssen entweder über einen Schnittarbeitsplatz umkopiert oder über einen Computerarbeitsplatz digital bearbeitet und wieder zurück kopiert werden. Ein Beispiel für ein derartiges Produkt ist die "Video Machine" von der Firma Fast Elektronik aus München. Um Vorteile der Digitaltechnik für die Video-Bildverarbeitung und Speicherung nutzbar zu machen, war es notwendig, neue Kompressionsverfahren einzuführen. Solche Verfahren sind heute beispielsweise JPEG (Joint Photographic Expert Group), beschrieben in "Der JPEG-Algorithmus" / MC Computerpraxis für technische Anwender / Heft Juni 6/93 / Franzis-Verlag GmbH München, oder MPEG (Motion Picture Expert Group), beschrieben in "Information technology - Coding of moving pictures and associated audio for digital storage media up to about 1,5 Mbit/s" / ANSI 1992 / Beuth Verlag Berlin / ISO/IEC DIS 11172.

Das MPEG-Verfahren ist ein inzwischen effektives und hardwareunterstütztes Verfahren, was aber durch die Video-Sequenzbildung die Bearbeitungs- und Schnittmöglichkeiten stark einschränkt. Das erste verfügbare digitale Video-Abspielsystem wurde von der Firma Philips mit CD-I (Compact Disk - Interactive) entwickelt. Es ist beim Abspielen zwar interaktiv komfortabel beeinflußbar, kann aber nach dem aufwendigen Produktions-Prozeß und dem Einbrennen nicht mehr aktualisiert werden.

Der Erfindung liegt die Aufgabe zugrunde, ein neuartiges Verfahren und eine entsprechende Einrichtung zur Informations- und Bildverarbeitung zu schaffen, die u.a. die genannten Nachteile von nur linear abspielbaren Bändern oder den aufwendigen Wechsel zwischen verschiedenen Aufzeichnungsmedien vom Band über Festplatte zur nur einmal beschreibbaren CD (Compact Disk) usw. überwindet.

Erfindungsgemäß wird diese Aufgabe dadurch gelöst, daß in Kombination von verlustfreier und auch verlustbehafteter Verfahren Informationen zur Beschreibung von Bildern und Bildfolgen als auch Bilder und Bildfolgen zur Beschreibung von Informationen erzeugt und in einem mehrdimensional aufgebauten oder mehrdimensional organisierbaren Speichersystem zur weiteren Verarbeitung abgelegt und benutzt werden. Vorteilhafte Weiterbildungsformen des erfindungsgemäßen Verfahrens und einer entsprechenden Einrichtung sind Gegenstand der Unteransprüche 2,3 und 5.

Damit wird eine bessere Erfassung, Auswertung, Übertragung, Wiedergabe und Speicherung von Informationen und Bildern, vorzugsweise für das audio-visuelle Wahrnehmungssystem des Menschen, möglich.

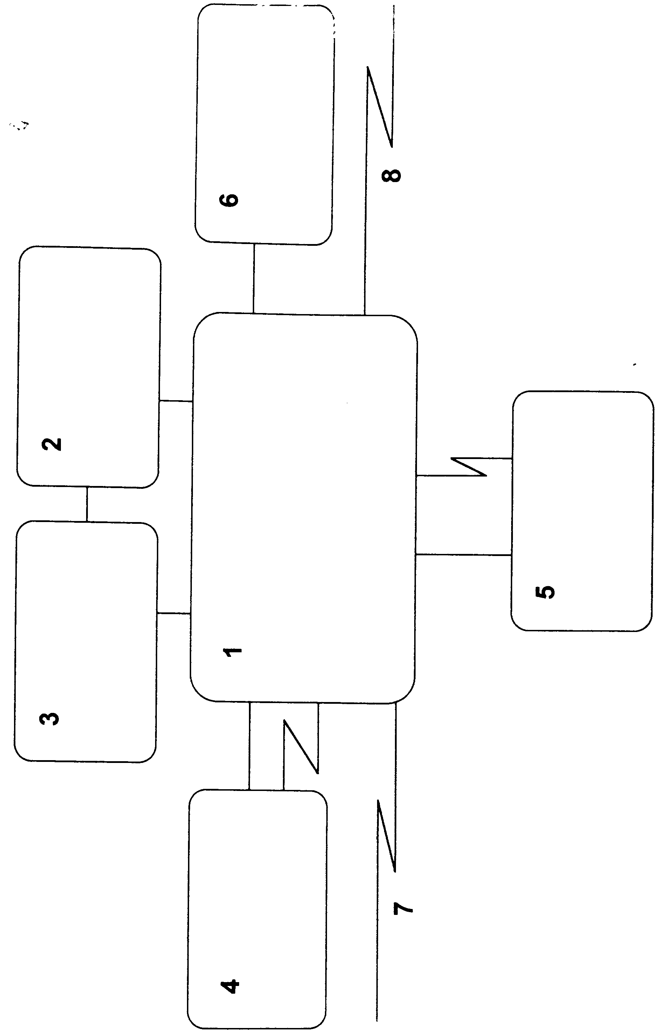

Die Erfindung soll nachstehend anhand von Beispielen und einer dazugehörigen Zeichnung näher erläutert werden. Entsprechend der Zeichnung besteht die erfindungsgemäße Einrichtung aus einer Informations- und Bild-Verarbeitungs-Einheit 1, in der beispielsweise verlustfreie als auch verlustbehaftete Verarbeitungsverfahren zum Einsatz kommen. Das mehrdimensionale Speichersystem 2 erlaubt die Speicherung von Informationen und Bildern nach beeinflußbaren oder zweckmäßigen Regeln, wobei der Abruf der Informationen und Bilder nach anderen Regeln erfolgen kann als bei der ursprünglichen Speicherung.

Die Steuerungs- und Verbindungs-Einheit 3 ist für das Zusammenwirken allen Hard- und Software-Komponenten des Systems einschließlich der Interaktionen über die Mensch-Maschine-Schnittstellen 5 zuständig. Die Detektor- und Konverter-Einheit 4 nimmt die gewünschten bzw. zur weiteren Verarbeitung benötigten Informationen und Bilder auf und realisiert die Anpassung an die Informations- und Bild-Verarbeitungs-Einheit 1. Die wechselbare Speicher-Einheit 6 arbeitet funktional ebenso wie das mehrdimensionale Speichersystem 2, es kann außerdem jedoch als eigenes Speichermedium z.B. zur Langzeitarchivierung oder auch zum Betrieb in kompatiblen externen Systemen genutzt werden. Die Informations- und Bild-Verarbeitungs-Einheit 1 verfügt außerdem je nach Anforderung über Möglichkeiten zur Eingangs- und Ausgangs-Kommunikation 7 bzw. 8.

In einem ersten Ausführungsbeispiel gelangt eine einfache und eindimensionale zeitabhängige Temperaturmessung beispielsweise der Außenluft über die Detektor- und Konverter-Einheit 4 oder die Eingangs-Kommunikation 7 in die Informations- und Bild-Verarbeitungs-Einheit 1. Wird oder wurde täglich je ein Meßwert über insgesamt 100 Jahre aufgezeichnet, so ergibt das ein umfangreiches und unüberschaubares Datenvolumen von 36 500 Werten. Ordnet man jetzt jedoch die 365 Tage als Punkte längs einer Zeile an und die 100 Jahre als entsprechende Fernsehzeilen auf einem Bildschirm am Human-Interface 5 und pseudocoloriert die Temperaturwerte, so nimmt die gesamte Information nach verlustfreier Verarbeitung nicht einmal ein Viertel des Fernsehschirms ein und ist sofort auch für Außenstehende auf einen Blick überschaubar. Und man wird sicher die Jahreszeiten als Streifen erkennen.

Diese eingangs einfachen aber umfangreichen Temperaturmessungen sind über die bildliche Darstellung direkt der Bildverarbeitung in den Einheiten 1 bis 3, beispielsweise der Bilddatenkompression zugänglich. Über beispielsweise algorithmische oder symbolische Bildbeschreibung wird das Temperatur-Bild in eine mathematische Beschreibung transformiert, die durch einen beispielsweise erreichten Kompressionsfaktor von 100:1 hervorragend für Kommunikation über 6 oder 8 und Speicherung in 2 geeignet ist.

In einem zweiten Ausführungsbeispiel wird nach dem erfindungsgemäßen Verfahren und einer entsprechenden Einrichtung zur mehrdimensionalen Informations- und Bildverarbeitung eine völlig neuartige virtuelle Video-Schnitt-Technik direkt in einer CCD-Video-Kamera gezeigt. Dabei arbeitet das mehrdimensionale Speichersystem 2 in Echtzeit und jedes einzelne Videobild kann in komprimierter oder unkomprimierter Form einzeln und direkt addressierbar abgespeichert und wieder aufgerufen werden. Nunmehr ist es möglich, beispielsweise über interaktive grafische Oberflächen jedes einzelne Bild mit jedem einzelnen Bild übereinander, untereinander, nacheinander, mit sich selbst, mit Bildauslassung, mit und ohne Wiederholung, mit oder ohne Effekt zu verbinden, zu verarbeiten usw.

Das Script bzw. die Informationen und die Beschreibung zur virtuellen Video-Schnitt-Verarbeitung werden im mehrdimensionalen Speichersystem 2 bzw. in der Steuerungs- und Verbindungs-Einheit 3 abgelegt. Diese Beschreibung kann auch zum abwärtskompatiblen Abspeichern auf lineares Video über die Ausgangs-Kommunikation 8 oder zum direkten Abspielen über das Human-Interface 5 aktiviert werden. Der Schnitt jedoch wird vorzugsweise erst bei der Wiedergabe erzeugt, ohne die gespeicherten Einzelbilder oder deren Speicherplatz ändern zu müssen.

Das erfindungsgemäße Verfahren und die entsprechende Einrichtung zu deren Umsetzung ist selbstverständlich nicht nur auf die beschriebenen Ausführungsbeispiele beschränkt. So lassen sich mit dem erfindungsgemäßen Verfahren und der entsprechenden Einrichtung selbstverständlich auch Töne und Sprache u.a. in Bilder und umgekehrt transformieren usw., mit dem Ziel und dem Ergebnis einer bessere Erfassung, Auswertung, Übertragung, Wiedergabe und Speicherung von Informationen und Bildern, vorzugsweise für das audiovisuelle Wahrnehmungssystem des Menschen.

### Aufstellung der verwendeten Bezugszeichen

1 Informations- und Bild-Verarbeitungs-Einheit
2 Mehrdimensionales Speichersystem
3 Steuerungs- und Verbindungs-Einheit
4 Detektor- und Konverter-Einheit
5 Human-Interface (Mensch-Maschine-Schnittstellen)
6 Wechselbare Speicher-Einheit
7 Eingangs-Kommunikation
8 Ausgangs-Kommunikation

## Patentansprüche

1. Verfahren zur Informations- und Bildverarbeitung mit einer Verarbeitungseinrichtung, gekennzeichnet dadurch, daß
in Kombination von verlustfreier und auch verlustbehafteter Verfahren Informationen zur Beschreibung von Bildern und Bildfolgen als auch Bilder und Bildfolgen zur Beschreibung von Informationen erzeugt und in einem mehrdimensional aufgebauten oder mehrdimensional organisierbaren Speichersystem zur weiteren Verarbeitung abgelegt und benutzt werden.

2. Verfahren nach Anspruch 1, gekennzeichnet dadurch, daß
Funktionen oder Meßkurven durch hierarchische oder parametrische Kodierung sowie intensitätsabhängige Grauwert- und/oder Farbwert-Kodierung in eine bildliche Darstellung überführt und mit entsprechenden Methoden der elektronischen Bildverbeitung be- und verarbeitet sowie der visuellen Auswertung zugänglich gemacht werden.

3. Verfahren nach Anspruch 1, gekennzeichnet dadurch, daß
mehrere Bilder oder auch Bildfolgen unkomprimiert oder komprimiert in jeweils einzelnen Bildern in einem nach Einzelbildern direkt adressierbaren Speicher zur weiteren Verarbeitung abgelegt werden und die weitere Verarbeitung vorzugweise virtuell erfolgt, wobei die Bearbeitungen und neuen Bildfolgen als Information bzw. Script abgespeichert werden, ohne die Einzelbilder oder deren Speicherplatz ändern zu müssen.

4. Einrichtung zur Informations- und Bildverarbeitung mit einer Verarbeitungseinrichtung, gekennzeichnet dadurch, daß
in Kombination von verlustfreier und auch verlustbehafteter Verfahren Informationen zur Beschreibung von Bildern und Bildfolgen als auch Bilder und Bildfolgen zur Beschreibung von Informationen erzeugt und in einem mehrdimensional aufgebauten oder mehrdimensional organisierbaren Speichersystem zur weiteren Verarbeitung abgelegt und benutzt werden.

5. Einrichtung nach Anspruch 4, gekennzeichnet dadurch, daß
die Einrichtung zur Informations- und Bildverarbeitung aus einer Informations- und Bildverarbeitungs-Einheit, einem mehrdimensionalen Speichersystem, einer Steuerungs- und Verbindungs-Einheit, einer Detektor- und Konverter-Einheit, einem Human-Interface und einer Wechsel-Speicher-Einheit besteht und nach Anforderung über Eingangs- und Ausgangs-Kommunikation verfügt.
